Europäisches Patentamt

European Patent Office

Office européen des brevets

(11) Veröffentlichungsnummer: **0 029 227**
**B2**

(12) **NEUE EUROPÄISCHE PATENTSCHRIFT**

(45) Veröffentlichungstag der neuen Patentschrift:
06.02.91

(21) Anmeldenummer: 80107027.7

(22) Anmeldetag: **14.11.80**

(51) Int. Cl.⁵: **C 04 B 28/24,** C 04 B 30/02,
C 04 B 14/00

(54) Verfahren zur Herstellung eines Wärmedämmformkörpers.

(30) Priorität: **17.11.79 DE 2946476**

(43) Veröffentlichungstag der Anmeldung:
**27.05.81 Patentblatt 81/21**

(45) Bekanntmachung des Hinweises auf die
Patenterteilung:
**06.02.91 Patentblatt 91/06**

(45) Bekanntmachung des Hinweises auf die
Entscheidung u̇ber den Einspruch:
**08.06.83 Patenblatt 83/23**

(84) Benannte Vertragsstaaten:
**AT BE CH DE FR GB IT LI NL SE**

(73) Patentinhaber: **Consortium für**
**elektrochemische Industrie GmbH**
**Zielstattstrasse 20**
**D-8000 München 70 (DE)**

(72) Erfinder: **Kratel, Günter, Dr. Dipl.-Chem.**
**Alpenblickstrasse 10**
**D-8961 Durach-Bechen (DE)**
Erfinder: **Katzer, Hans, Dr. Dipl.-Chem.**
**Anwanden 11**
**D-8960 Kempten (DE)**
Erfinder: **Lotz, Joachim R.**
**Klingerstrasse 44**
**D-8000 München 70 (DE)**
Erfinder: **Weis, Klaus**
**Ledererstrasse 7**
**D-8000 München 2 (DE)**

(56) Entgegenhaltungen:
EP-A-0 002 487      DE-A-2 754 956
EP-A-0 027 264      DE-A-2 806 367
DE-A-1 671 186      JP-A-54 003 113
DE-A-2 524 096      US-A-3 055 831
DE-A-2 557 741      US-A-4 014 704
DE-A-2 748 307

CHEMICAL ABSTRACTS, Band 90, 1979, Seite
288, Zusammenfassung Nr. 191438q, Columbus,
Ohio, US

EP 0 029 227 B2

Courier Press, Leamington Spa, England.

**Beschreibung**

Die Erfindung betrifft ein Verfahren zur Herstellung von Wärmedämmformkörpern auf Basis feindisperser wasserunlöslicher oxidischer Metallverbindungen, insbesondere der Elemente Silicium und/oder Aluminium, anorganischer Bindemittel, gegebenenfalls Trübungsmittel, gegebenenfalls mineralischer Fasern und gegebenenfalls weiterer Zusätze, mit Wärmeleitfähigkeiten von 0,02 bis 0,1 W/(m·K) bei Temperaturen von ca. 300 bis ca. 500°C.

Formkörper aus einem Gemisch pyrogenerzeugter Kieselsäure mit Trübungsmittel und Mineralwolle, die durch Pressen bei hohem Druck und anschliessende Beschichtung mit z.B. Kaliwasserglas hergestellt werden, sind z.B. aus der DE—A Nr. 2747663 bekannt. Die DE—A Nr. 2712625 wiederum schlägt vor, Gemische pryogener Kieselsäure und Trübungsmittel in einer Umhüllung aus Glasgewebe, Papier, Schumpffolie oder ähnlichem unter Erwärmen zu pressen, so dass die so hergestellt Isolierplatte durch die Spannung der sich beim Erkalten zusammenziehenden Umhülung zusammengehalten wird. Auch sind Wärmedämmplatten bekannt, bei deren Herstellung hochdisperse Kieselsäure und Trübungsstoff bei hohem Druck lediglich verpresst werden. Die letztgenannten Platten eignen sich nur für solche Verwendungen, bei denen sie keiner mechanischen Beanspruchung und nicht der Gefahr ausgesetzt werden, dass sie nass werden können. Insbesondere beim Nasswerden wird das Plattengefüge im allgemeinen völlig zerstört. Auch eine Umhüllung der Platte kann diesen Nachteil kaum beheben, insbesondere wenn die Umhüllung durch Temperatureinflüsse langsam zersetzt oder aufgelöst wird. Die durch den mineralischen Binder überzogene Platte löst zwar die vorstehend genannten Schwierigkeiten, jedoch wird diese Beschichtung als Gemisch des Bindemittels und weiterer Zusätze mit Wasser aufgebracht, so dass die Platte zumindeste bis zu einer gewissen Tiefe damit getränkt wird. Dies bewirkt aber eine Strukturänderung der Platte, z.B. durch Ausfüllen der Poren in diesem Bereich, wodurch ein Teil der Isolierfähigkeit verlongeht. Auch kann die Platte nicht mechanisch bearbeitet werden, z.B. kann sie nicht durch Sägen, Feilen oder ähnliches auf kleinere Masse gebracht werden, ohne wegen Verletzung der Bindeschicht zumindest teilweise ihre Festigkeit zu verlieren. Dieses Problem stellt sich auch bei einer oberflächlichen Hydrophobierung, die z.B. in der DE—A Nr. 2754517 vorgeschlagen wird.

Die japanische Offenlegungsschrift Nr. 5403113 (1979), nach "Chem. Abstr.", 90 (1979), 191438q, wiederum schlägt vor, Zirkonerde mit Eisenmehl zu versetzen, dieses Gemisch zu Platten zu verpressen und schliesslich zu brennen. Brenntemperaturen rufen bekanntermassen bei solchen feindispersen Stoffen Sintervorgänge hervor, die im allgemeinen mit einer Volumenänderung und einer Änderung der Wärmeleitfähigkeit in Folge der Ausbildung glasiger Strukturen und von Wärmebrücken einhergehen.

Aus der US—A Nr. 3055831 sind Wärmedämmformkörper aus anorganischem Aerogel, Trübungsmittel, Fasern und/oder Binder bekannt. Sofern nicht nur eine vorübergehende Isolierung beabsichtigt ist, werden dort als Binder anorganische Bindemittel wie niedrig schmelzende Gläser oder Emailles, Phosphate und Natriumsilicate empfohlen, ansonsten können auch, sofern keine Temperaturen über 260°C beabsichtigt sind, organische Bindemittel eingesetzt werden.

In der DE—A Nr. 2748307 werden ähnliche Wärmedämmformkörper unter Verwendung von Wasserglas und in der DE—A Nr. 2754956 solche ohne Bindemittel, allerdings nur für Verwendungen bis höchstens ca. 400°C vorgeschlagen. Für diese Formkörper treffen die eingangs genannten Schwierigkeiten in vollem Umfang zu.

Aufgabe der vorliegenden Erfindung war daher, ein Verfahren zur Herstellung von Wärmedämmformkörpe mit gegenüber lediglich verpressten Formkörpern nicht oder nicht merklich erhöhter Wärmeleitfähigkeit und mit gleichmässig hoher Festigkeit über den ganzen Formkörper zur Verfügung zu stellen. Dieser Formkörper sollte auch nachträglich mechanisch bearbeitbar sein, ohne dass dadurch Festigkeitseinbussen eintreten.

Diese Aufgabe wird durch ein Verfahren gelöst, das dadurch gekennzeichnet ist, dass

1. a) 100 Gewichtsteile wasserunlöslicher oxidischer Metallverbindungen, insbesondere der Elemente Silicium und/oder Aluminium, mit einer BET-Oberfläche von 10 bis 700 m²/g, wobei mindestens 5 Gew.% des Gesamtgewichts dieser Verbindungen eine BET-Oberfläche von mindestens 50 m²/g besitzen,

b) 0 bis 100, vorzugsweise 5 bis 80 Gewichtsteile mineralischer Trübungsmittel mit mindestens einem Absorptionsmaximum im Wellenlängenbereich von 1,5 bis 10 μm.

c) Elemente und/oder Verbindungen dieser Elemente untereinander und/oder mit Calcium oder Kohlenstoff und/oder deren Gemische in solchen Mengen, dass die Elemente, die mindestens ein festes, in kaltem Wasser nur schwer bis unlösliches, basisch bis schwach sauer reagierendes Oxid ohne ausgeprägte oxidierende oder reduzierende Eigenschaften mit einer Standardbildungsenthalpie von kleiner −900 kJ/mol bilden können, in Mengen von 0,1 bis 30, vorzugsweise 0,5 bis 15 Gewichtsteilen, vorliegen,

d) 0 bis 100, vorzugsweise 15 bis 50 Gewichtsteile mineralischer Fasern, und

e) 0 bis 20, vorzugsweise 0 bis 10 Gewichtsteile mineralischer Pigmente und/oder Erdalkalioxide trocken unter Erhalten der Struktur der Komponenten gemischt,

2. die Mischung (en) in die gewüschte Form gebracht,

3. auf Dichten von 0,15 bis 1, vorzugsweise 0,2 bis 0,5 g/cm³, verdichtet, und

4. auf 200 bis 900°C, jedoch mindestens auf eine solche Temperatur, erhitzt werden, bei der eine chemische Reaktion einsetzt die unter Vermeidung einer Sinterung zu einem Körper mit einer auch unter Einwirkung von Wasser im Bereich von 0,5—3 MN/m² bleibenden Druckfestigkeit führt.

Basis der erfindungsgemäss hergestellten Wärmedämmformkörper sind weitgehend wasserunlösliche oxidische Metallverbindungen a, insbesondere der Elemente Silicium und/oder Aluminium. Unter solchen Metallverbindungen werden hier die Oxide und deren weitgehend unlösliche Salze verstanden, z.B. Zirkondioxid, Titandioxid, vorzugsweise aber Siliciumdioxid und Aluminiumoxid, aber auch wasserunlösliche Silicate und Alumosilicate, mit Oberflächen von 10 bis 700 m²/g, gemessen mit der BET-Methode (vgl. "ASTM Special Technical Publication", Nr. 51, 1941, S. 95 ff.) Die oxidischen Metallverbindungen können hergestellt werden durch Fällung oder im Fall der hochdispersion Oxide durch Flammhydrolyse. Die nach der letzteren, in der Technik üblichen Herstellungsart hergestellten Oxide, insbesondere die sogenannte pyrogenerzeugte Kieselsäure und das pyrogenerzeugte Aluminiumoxid sowie ihre Mischungen und Mischoxide sind besonders bevorzugt. Diese hochdispersen Oxide besitzen vorzugsweise BET-Oberflächen von 50 bis 700, insbesondere 100 bis 400 m²/g, besonders vorzugsweise 200 bis 380 m²/g.

Trübungsmittel b, die im Rahmen der vorliegenden Erfindung eingesetzt werden können, sind anorganische Oxide, Mischoxide, Carbide und Nitride mit mindestens einem Absorptionsmaximum im Bereich der elektromagnetischen Wellen mit Wellenlängen von 1,5 bis 10 μm. Beispielhaft seien hier genannt: Ilmenit, Titanoxid, Siliciumcarbid, Eisenoxid, Chromoxid, Zirkonoxid, Mangandioxid, Eisen (II)/Eisen (III)-Mischoxid und ihre Gemische. Diese Trübungsmittel besitzen vielfach BET-Oberflächen von 0,02 bis 20 m²/g.

Es ist auch möglich und erweist sich oft als vorteilhaft, die oxidischen Metallverbindungen a und die Trübungsstoffe b in Form agglomerierter Mischungen einzusetzen, die z.B. in der DE—A Nr. 2854984 beschrieben werden.

Weiterhin werden dem Gemisch zur Herstellung der erfindungsgemässen Wärmedämmformkörper solche Elemente und/oder Gemische und/oder Verbindungen solcher Elemente zugesetzt, die ein stabiles, festes Oxid mit einer Standardbildungsenthalpie von kleiner −900 kJ/mol bilden können. Unter Standardbildungsenthalpie von kleiner −900 kJ/mol wird die bei der Reaktion aus den Elementen zu 1 mol Oxid bei 298 K frei werdende Wärmemenge verstanden, die im gegebenen Fall mehr als 900 kJ/mol betragen würde, wobei die Elemente in ihren Standardbedingungen vorliegen (stabile Formen bei 101, 325 kPa Druck und 298 K) (vgl. Aylward/Findlay, "Datensammlung Chemie in SI-Einheiten", Taschentext 27, Verlag Chemie-Physik-Verlag, Weinheim/Bergstr., 1975, Übersetzung der "SI Chemical Data", John Wiley & Sons, Australasia Pty. Ltd., Sydney, 1971).

Mindestens eines der festen Oxide dieser Elemente ist in kaltem Wasser nur schwer bis unlöslich, reagiert basisch bis schwach sauer und besitzt keine ausgeprägten oxidierenden oder reduzierenden Eigenschaften. Beispiele für Elemente, die solche Oxide bilden, sind Bor, Aluminium, Silicium, Antimon, Zirkonium, Titan, Chrom, Mangan und Eisen. Es ist auch möglich, Verbindungen aber auch Verbindungen der genannten Elemente untereinander einzusetzen, z.B. Boride wie Zirkonborid, Aluminiumborid und Titanborid, aber auch Verbindungen Elemente dieser insbesondere des Bors, mit Calcium und mit Kohlenstoff, also Calcilumborid und auch Borcarbid. Weiterhin seien Silicide wie Calciumsilicid und Calciumaluminiumsilicid genannt. Es können natürlich auch Gemische dieser Elemente bzw. Verbindungen mit anderen der genannten Elemente und Verbindungen eingesetzt werden. Bevorzugt werden Calciumborid, Borcarbid, Titanborid und insbesondere Silicium, Aluminium und vor allem aber Eisen.

Mineralische Fasern im Rahmen der Erfindung sind Glaswolle, Steinwolle, Schlackenwolle, keramische Fasern, wie solche, die aus der Schmelze von Aluminiumoxid und/oder Siliciumoxid hergestellt sind.

Es hat sich vielfach auch als vorteilhaft erwiesen, bis zu 20 Gewichtsteilen, vorzugsweise bis zu 10 Gewichtsteilen, weitere Zusätze einzubringen. Hierbei werden insbesondere mineralische Pigmente, wie Farben, die auch als Unterglasurfarben in der Keramik- und Porzellanherstellung verwendet werden, und Erdalkalioxide, z.B. Magnesiumoxid und vorzugsweise Calciumoxid, eingesetzt.

Die oxidischen Metallverbindungen können bis zu 95 Gew.%, bezogen auf das Gesamtgewicht der oxidischen Komponente a, aus $SiO_2$-Abfallstoffen bestehen, die bei der Herstellung von Silicium oder Ferrosilicium, z.B. als Filterstäube, anfallen, z.B. aus $SiO_2$-Füller N der Firma Süddeutsche Kalkstickstoff-Werke AG, Trostberg, Bundesrepublik Deutschland (ein Silicium-Füllstoff mit einer spezifischen BET-Oberfläche von 10 bis 20 m²/g).

Dieser $SiO_2$-Füller N, ein hellgraues amorphes Pulver, setzt sich zusammen aus:

| | |
|---|---|
| $SiO_2$ | 84 bis 92% |
| Gesamteisen (als $Fe_2O_3$) angegeben | 0,9 bis 6% |
| Freies Eisen (hauptsächlich in Form von Eisenstaub) | 0,25 bis 0,75% |
| $Al_2O_3$ | 0,6 bis 1,2% |
| MgO | 1,2 bis 2,5% |
| CaO | 0,7 bis 3,2% |
| Freier Kohlenstoff | 1 bis 6% |

Aufgrund seiner Zusammensetzung kann selbstverständlich ein Zusatz von weiteren Trübungsmitteln und von weiteren solchen Elementen und/oder Gemischen und/oder Verbindungen solcher Elemente, die ein stabiles Oxid mit einer Standardbildungsenthalpie von kleiner −900 kJ/mol bilden, im Rahmen der erfindungsgemässen Zusammensetzung der Wärmedämmformkörper, teilweise oder völlig unterbleiben.

Die genannten Komponenten werden als Pulver trocknen unter Erhaltung ihrer Struktur gemischt, d.h. ihre Teilchengrösse wird im allgemeinen schon unter 1 mm, insbesondere unter 0,5 mm liegen, und die Mischung erfolgt in der Weise, dass vorzugsweise kein Mahlvorgang stattfindet.

Die so erhaltene Mischung wird in eine Form eingefüllt und vorzugsweise mit einem Druck von 10 bis 200 N/cm² verpresst. Beim Verpressen sollen die in der Mischung eingeschlossenen Gase entweichen können. Daher erfolgt das Verpressen vorzugsweise unter Anlegen von Unterdruck. Diese Entgasung kann selbstverständlich auch schon vor dem Pressen erfolgen oder beginnen. Auf diese Weise werden Formkörper, z.B. Platten, Profile und Rohre, erhalten mit Dichten von 0,15 bis 1, vorzugsweise 0,2 bis 0,5 g/cm³.

Nach der Entformung werden diese Formkörper für wenige Minuten bis mehrere Stunden, z.B. etwa $\frac{1}{4}$ bis etwa 4 h, vorzugsweise $\frac{1}{2}$ bis 2 h, auf Temperaturen von 200 bis 900, vorzugsweise 500 bis 800°C, erhitzt. Die Wärmeübertragung kann durch Konvektion, durch Wärmestrahlung oder durch Wärmeleitung auf den Formkörper übertragen werden. Wegen der gleichmässigeren Einwirkung werden die Wärmestrahlung und die Wärmeübertragung durch Konvektion von heissen Gasen bevorzugt. Die Erhitzung kann vorzugsweise beim Druck der umgebenden Atmosphäre (ca. 1 bar) oder auch bei höheren Drücken erfolgen. Auch ist es möglich, die Erhitzung in der Formpresse durchzuführen, dies ist jedoch nicht bevorzugt.

Diese Erhitzung erfolgt vorzugsweise höchstens bei solchen Drücken, die keine weitere Volumenverkleinerung des Formkörpers mehr bewirken, und auf mindestens solche Temperaturen, bei denen eine chemische, vorzugsweise exotherme, Reaktion einsetzt. Nach Einsetzen dieser Härtungsreaktion wird der Formkörper von aussen vorzugsweise nicht weiter auf noch höhere Temperaturen erhitzt.

Nach Ende der Reaktion, die eine deutliche Zunahme der Festigkeit des Wärmedämmformkörpers in seinem gesamten Volumen und gegenüber Kräften, die in verschiedene Richtungen angewandt werden, hervorruft, wird der Formkörper langsam abgekühlt. Dies kann durch Erkaltenlassen der Erhitzungsvorrichtung, z.B. eines Kammerofens oder durch Austragen aus einer solchen Erhitzungsvorrichtung, z.B. auch aus einem Tunnelofen, erfolgen. Die Härtung kann in an sich, z.B. in der keramischen Industrie bekannter Weise unter Beachtung der hier genannten Bedingungen und unter Anwendung der erfindungsgemässen Massnahmen, wie auch das übrige erfindungsgemässe Verfahren im Chargenbetrieb (diskontinuierlich), im Taktbetrieb (teilkontinuierlich) oder im Bandbetrieb (kontinuierlich) durchgeführt werden.

Der Reaktionsverlauf bei der thermischen Härtung, insbesondere der Beginn und das Ende der chemischen Reaktion, kann beispielsweise mittels Differentialthermoanalyse, bei der mit Hilfe von Thermofühlern Temperaturänderungen des Formkörpers infolge der Wärmetönung der Härtungsreaktion gegenüber der Temperatur der Umgebung wie etwa der äusseren Wärmequelle, z.B. des Härtungsofens, gemessen werden können, verfolgt und ggf. dann entsprechend gesteuert werden.

Bei Einhalten der angegebenen Zusammensetzung und der angegebenen Temperatur tritt bei der Erhitzung überraschenderweise zwar eine deutliche Verfestigung des Formkörpers, aber offenbar noch keine Sinterung auf.

So bleibt die Wärmeleitfähigkeit des gehärteten Formkörpers mit 0,02 bis 1 W/(m·K) (gemessen nach Vornorm DIN 51 046/Aug. 1976 bzw. ISO/TC 33 bei ca. 300 bis 500°C) praktisch auf dem Wert des nur gepressten Formkörpers, d.h. es werden offenbar keine Wärmebrücken durch Verglasung gebildet. Überraschenderweise treten weiterhin praktisch keine Änderungen der Form, des Volumens und der Porosität des Wärmedämmformkörpers auf. Die BET-Oberfläche des Formkörpers bleibt beim Erhitzen im allgemeinen praktisch unverändert.

In manchen Fällen wird zwar eine gewisse Verkleinerung dieser BET-Oberfläche beim Erhitzen gefunden, jedoch meist deutlich unter 10%, z.B. bei etwa 6%, bezogen auf den Ausgangswert.

Durch das Erhitzen wird überraschenderweise eine deutliche Verfestigung des Formkörpers über seinen gesamten Querschnitt, also nicht nur oberflächlich, festgestellt. So steigt seine Druckfestigkeit meist um das 1,5- bis 5fache, vielfach um das mehr als 2fache des Wertes des Formkörpers vor dem Erhitzen auf 0,5 bis 3 MN/m², und die Biegezugfestigkeit erreicht Werte im Bereich von 0,05 bis ca. 0,5 N/mm². Die Porosität des erfindungsgemässen Wärmedämmformkorpers beträgt im allgemeinen 50 bis 90%, bezogen auf das Gesamtvolumen des Körpers.

Als besonders überraschend erwies sich die Festigkeit des erfindungsgemäss hergestellten Wärmedämmkörpers bei der Einwirkung von Wasser. Seine Druckfestigkeit blieb im obengenannten Bereich von 0,5 bis 3 MN/m², während nicht erfindungsgemäss hergestellte Formkörper entweder sofort beim Wässern zerfielen oder aber dabei der genannte Bereich der Druckfestigkeit deutlich unterschritten wurde.

Der erfindungsgemäss hergestellte Wärmedämmformkörper zeichnet sich weiterhin dadurch aus, dass er dank seiner Zusammensetzung und seiner grossen Festigkeit sehr gut mechanisch, z.B. durch Sägen, Schneiden, Schleifen, Feilen oder Bohren bearbeitet werden kann, ohne dass er dabei an Festigkeit verliert. Er kann deshalb z.B. gut in vorgegebene Montages-

tellen eingepasst werden, hierbei kann vielfach eine gute Kanten- und Eckenfestigkeit festgestellt werden. Auch ein Einschlagen von z.B. Nägeln ist möglich.

Vielfach wird als oxidische Komponente a lediglich Siliciumdioxid, z.B. als pyrogenerzeugte Kieselsäure und ggf. als SiO$_2$-Füller N eingesetzt. Hierbei werden Formkörper erhalten, die bei der Verwendung als Wärmeisolierung bis auf etwa 950°C erhitzt werden können, ohne ihre Wärmedämmeigenschaften zu verlieren und sich dabei durch Sinterung zu verziehen. Diese Temperaturen können auch kurzfristig, z.B. um 50 bis 100°C, überschritten werden.

Soll der Formkörper bei noch höheren Temperaturen eingesetzt werden, so wird der Kieselsäureanteil vorzugsweise durch hochdisperse Oxide mit höheren Phasenübergangstemperaturen als SiO$_2$, z.B. Titanoxid, vorzugsweise Aluminiumoxid, teilweise oder ganz ersetzt. Mit wachsendem Anteil solcher Oxide, vorzugsweise Aluminiumoxid, steigt auch die Temperaturfestigkeit des erfindungsgemässen Wärmedämmformkörpers. Bei vollständigem Ersatz des Siliciumoxids durch solche Oxide, vorzugsweise Aluminiumoxid, lässt sich der Temperaturbereich, in dem der erfindungsgemäss hergestellte Wärmedämmformkörper ohne merkliche Einbusse seiner Eigenschaften einsetzbar ist, bis auf 1500, vorzugsweise auf 1200°C, ausdehnen.

Wegen seiner guten Wärmeisoliereigenschaften braucht vielfach nicht der gesamte Formkörper aus solchen höher schmelzenden Oxiden, vorzugsweise Aluminiumoxid, hergestellt zu werden. Oftmals erweist es sich aus wirtschaftlichen Gründen als vorteilhaft, einen Wärmedämmformkörper herzustellen, der vereinfachend als Schichtformkörper bezeichnet werden kann. Mit dieser Bezeichnung soll ausgedrückt werden, dass der Teil des erfindungsgemässen Wärmedämmformkörpers, der der Wärmequelle zugewandt ist, nur oder überwiegend solche höher schmelzenden Oxide, vorzugsweise Aluminiumoxid, als Komponente a enthält, während die übrigen Teile zumindest teilweise Siliciumdioxid und ggf. die anderen SiO$_2$-Abfallstoffe, z.B. SiO$_2$-Füller N, als Komponente a enthalten. Dieser Schichtformkörper wird erfindungsgemäss wie oben beschrieben hergestellt, wobei die verschiedenen Teile der Form mit verschiedenen, wunschgemäss zusammengesetzten Gemischen gefüllt werden.

Überraschenderweise lassen sich bei solchen Schichtformkörpern praktisch keine Unterschiede in der Druckfestigkeit der verschieden zusammengesetzten Teile feststellen und sind die verschieden zusammengesetzten Teile fest, praktisch ohne Festigkeitsunterschiede, an der Grenze der Schichten miteinander verbunden. Der Übergang der verschiedenen Schichten kann selbstverständlich auch in mehreren Stufen erfolgen.

Falls der erfindungsgemäss hergestellte Wärmedämmformkörper, insbesondere bei niedrigen Temperaturen der Feuchtigkeit ausgesetzt wird, z.B. im Baubereich oder in der Kühltechnik, kann es vorteilhaft sein, ihn z.B. nach dem Verfahren der DE—A Nr. 2754517 zu hydrophobieren.

Als Verwendung des erfindungsgemäss hergestellten Wärmedämmformkörpers bieten sich der Bausektor, z.B. die Verwendung als Wärmeisolierung von Bauwerken, zumal der erfindungsgemässe Formkörper auch nicht brennbar ist, und überdies eine gute Flammfestigkeit aufweist, der Bereich der Wärmeisolierung von elektrischen Einrichtungen, da der erfindungsgemäss hergestellte Wärmedämmformkörper ausserdem ein elektrischer Isolator ist, und der Bereich der Installationen an, da er im allgemeinen nicht korrosiv wirkt.

Der erfindungsgemäss hergestellte Wärmedämmformkörper kann z.B. eingesetzt werden zur Isolierung von Hochtemperaturbatterien (beispielsweise an Natriumschwefelbatterien), von Transformatoren, als Wickelkörper für elektrische Spulen und Heizwicklungen (wie insbesondere bei Kochplatten analog den DE—A Nr. 2744079 und 2806367), zur Isolierung von Wärmespeichern, von Öfen, von Wasser- und ähnlichen Leitungen, von elektrischen Leitern, zur zur Isolierung und zum Schutz von Computeranlagen, von Flugschreibern und von Tanks für brennbare Flüssigkeiten.

Die folgenden Beispiele sollen die Erfindung näher erläutern.

In den folgenden Beispielen und Vergleichsversuchen wurden als Prüfkörper Prüfplatten hergestellt und jeweils vor und nach dem Erhitzen untersucht. Die bei diesen Eigenschaftsprüfungen erhaltenen Werte sind gekennzeichnet mit V (Prüfung vor dem Erhitzen) oder N (Prüfung nach dem Erhitzen).

### Beispiel 1

48,5 g modifizierter pyrogenerzeugter Kieselsäure (HDK) mit einer BET-Oberfläche von ca. 250 m$^2$/g, die mit 15 Gew.% Ilmenit (FeTiO$_3$), bezogen auf das Gesamtgewicht der fertigen HDK, nach dem Verfahren der DE—A Nr. 2854984 coagglomeriert worden war (HDK/15 Gew.% FeTiO$_3$), und

1,5 g handelsübliches Calciumborid (CaB$_6$-PL-fein, Firma Elektroschmelzwerk Kempten GmbH, München) wurden in einem Mischer gut vermengt. Aus dem homogenen Gemisch wurde in einer Stempelpresse eine Prüfplatte (⌀ 11 cm, Dicke 1,8 cm, Dichte 0,29 g/cm$^3$) hergestellt. Die Platte wurde nach einer ersten Druckfestigkeitsprüfung (nach deutscher Industrienorm DIN 53 456/Jan. 73) in einem Kammerofen 2 h bei 753°C erhitzt und nach dem Abkühlen erneut geprüft. Die Platte war nun hart und mechanisch bearbeitbar, ihre Dimensionen waren unverändert.

Druckfestigkeit  V: 1,22 MN/m$^2$
N: 2,65 MN/m$^2$

### Beispiel 2

Beispiel 1 wurde wiederholt mit der ~ Zusammensetzung: 47,5 g HDK, ~ mit 15 Gew.% Titandioxid, be~

ifizierte pyrogenerzeugte Kieselsäure, und 2,5 g des handelsüblichen Calciumborids.

Druckfestigkeit V: 1,04 MN/m²
N: 2,22 MN/m²

### Beispiel 3

Beispiel 1 wurde wiederholt mit den Abänderungen: 47,5 g statt 48,5 der modifizierten Metalloxidkomponente aus Beispiel 1 und 2,5 g des handelsüblichen Titanborids ($TiB_2$-PL-Zyklonstaub, Firma Elektroschmelzwerk Kempten GmbH, München)

Druckfestigkeit V: 1,22 MN/m²
N: 2,25 MN/m²

Wärmeleitfähigkeit (Vornorm DIN 51 046/ Aug. 1976) N: 0,030 W/(m·K) (bei 300°C)

### Beispiel 4

75,2 g modifizierter pyrogenhergestellter Kieselsäure mit einer BET-Oberfläche von ca. 200 m²/g, hergestellt durch Agglomeration nach DE—A Nr. 2854984 mit, bezogen auf das Gesamtgewicht der Komponente, 34 Gew.% Ilmenit, 4 g einer handelsüblichen Aluminiumsilikatfaser (Kerlane® 45, Firma Savoie-Feuerfest, Düsseldorf), und 0,8 g des handelsüblichen Calciumborids aus Beispiel 1 wurden in einem Mischer gut vermengt und zu einer Pressplatte (ø 18 cm, Dicke 1 cm, Dichte 0,31 g/cm³) verpresset. Anschliessend wurde die Platte in einem Kammerofen 2 h auf 750°C erhitzt. Die Platte war nach dem Erkalten mechanisch bearbeitbar und etwas elastisch.

Druckfestigkeit V: 0,69 MN/m²
N: 1,30 MN/m²

Biegefestigkeit (DIN 53 423/Nov. 75)
V: 0,12 N/mm²
N, 0,22 N/mm²

Porenvolumen, bezogen auf Gesamtvolumen
V: 84 Vol.%
N: 86 Vol.%
BET-Oberfläche V: 167 m²/g
N: 156 m²/g

Anschliessend wurde die Platte in Wasser gelegt, bis sie sich vollständig gesättigt hatte. Die Druckfestigkeit der Platte betrug 1,08 MN/m².

### Vergleichsversuch A

Die Beispiele 1 und 4 wurden wiederholt mit der Ausnahme, dass die Prüfplatten nach dem Verpressen sofort ohne vormaliges Erhitzen mit Wasser gesättigt wurden. Die Platte der Zusammensetzung des Beispiels 1 zerfiel, die Platte der Zusammensetzung des Beispiels 4 besass eine Druckfestigkeit von nunmehr 0,13 MN/m².

### Beispiel 5

Beispiel 4 wurde wiederholt mit der abgeänderten Zusammensetzung: 106,8 g der modifizierten HDK aus Beispiel 4, 12 g der Mineralfaser aus Beispiel 4 und 1,2 g des Titanborids aus Beispiel 3. Die Plattenabmessungen betrugen: ø 18 cm, Dicke 2 cm, Dichte 0,24 g/cm³.

Druckfestigkeit V: 0,53 MN/m²
N: 1,36 MN/m²

### Beispiel 6

Beispiel 5 wurde wiederholt mit der Abänderung, dass statt des Titanborids 1,2 g eines handelsüblichen Aluminiumboridpulvers eingesetzt wurden.

Druckfestigkeit V: 0,72 MN/m²
N: 1,32 MN/m²

### Beispiel 7

Beispiel 5 wurde wiederholt mit der Ausnahme, dass statt des Titanborids 1,2 g eines bei der Borcarbidherstellung anfallenden Borcarbidfilterstaubs (Elektroschmelzwerk Kempten GmbH, München) verwendet wurden.

Druckfestigkeit V: 0,52 MN/m²
N: 1,40 MN/m²

Wärmeleitfähigkeit (Vornorm DIN 51 046)
N: 0,028 W/(m·K) (bei 300°C)

### Beispiel 8

116,4 g einer handelsüblichen pyrogenhergestellten Kieselsäure (Wacker HDK® T 30, BET-Oberfläche etwa 300 m²/g) und 3,6 g Borpulver (Korngrösse ⩽ 50 µm) wurden in einem Mischer gut vermengt und zu einer Pressplatte (ø 18 cm, Dicke 2,0 cm, Dichte 0,24 g/cm³) verpresst. Anschliessend wurde die Platte in einem Kammerofen 2 h auf 735°C erhitzt. Nach dem Abkühlen konnte die harte Platte mechanisch bearbeitet werden.

Druckfestigkeit V: 0,80 MN/m²
N: 2,33 MN/m²

### Beispiel 9

Beispiel 8 wurde wiederholt mit der Abänderung, dass statt des Bors 3,6 g Siliciumpulver (Korngrösse ⩽ 100 µm) eingesetzt wurden.

Druckfestigkeit V: 0,78 MN/m²
N: 1,15 MN/m²

### Beispiel 10

Beispiel 8 wurde wiederholt mit der Abänderung, dass statt des Bors 3,6 g Eisenpulver (Korngrösse ⩽ 100 µm) eingesetzt wurden.

Druckfestigkeit V: 0,65 MN/m²
N: 1,63 MN/m²

### Beispiel 11

Beispiel 8 wurde wiederholt mit der Abänderung, dass statt des Bors 2,6 g Aluminiumpulver (Korngrösse ⩽ 100 µm) eingesetzt wurden.

Druckfestigkeit V: 0,74 MN/m²
N: 1,58 MN/m²

Beispiel 12

45,4 g SiO₂-Füller N (Süddeutsche Kalkstickstoff-Werke AG, Trostberg), 19,4 g der modizierten HDK aus Beispiel 4 und 7,2 g der mineralischen Faser aus Beispiel 4 wurden in einem Mixer gut gemischt. Die daraus hergestellte Pressplatte (⌀ 11 cm, Dicke 2 cm, Dichte 0,38 g/cm³) wurde anschliessend in einem Kammerofen 2 h auf 750°C erhitzt. Nach der Abkühlung konnte die harte Platte mechanisch bearbeitet werden.

Druckfestigkeit V: 0,25 MN/m²
N: 1,17 MN/m²

Wärmeleitfähigkeit N: 0,039 W/(m·K) (bei 300°C)

Beispiel 13

116,4 g der HDK aus Beispiel 8, 1,48 g Siliciumpulver (Korngrösse ≤ 100 µm) und 2,97 g gepulvertes Calciumoxid wurden in einem Mixer gut vermischt. Die daraus hergestellte Pressplatte (⌀ 18 cm, Dicke 2,0 cm, Dichte 0,24 g/cm³) wurde in einem Kammerofen 2 h auf 735°C erhitzt. Nach dem Erkalten konnte die harte Platte mechanisch bearbeitet werden.

Druckfestigkeit V: 0,73 MN/m²
N: 2,33 MN/m²

**Patentansprüche**

1. Verfahren zur Herstellung von Wärmedämmformkörpern auf Basis feindisperser wasserunlöslicher oxidischer Metallverbindungen, insbesondere der Elemente Silicium und/oder Aluminium, anorganischer Bindemittel, gegebenenfalls Trübungsmittel, gegebenenfalls mineralischer Fasern und gegebenenfalls weiterer Zusätze, mit Wärmeleitfähigkeiten von 0,02 bis 0,1 W/(m·K) bei Temperaturen von ca. 300 bis ca. 500°C, dadurch gekennzeichnet, daß

1a) 100 Gewichtsteile wasserunlöslicher oxidischer Metall-Verbindungen, insbesondere der Elemente Silicium und/oder Aluminium, mit einer BET-Oberfläche von 10 bis 700 m²/g, wobei mindestens 5 Gew.% des Gesamtgewichts dieser Verbindungen eine BET-Oberfläche von mindestens 50 m²/g besitzen.

b) 0 bis 100 Gewichtsteile mineralischer Trübungsmittel mit mindestens einem Absorptionsmaximum in Wellenlängenbereich von 1,5 bis 10 µm.

c) Elemente und/oder Verbindungen dieser Elemente untereinander und/oder mit Calcium oder Kohlenstoff und/oder oder deren Gemische in solchen Mengen, daß die Elemente, die mindestens ein festes, in kaltem Wasser nur schwer bis unlösliches, basisch bis schwach sauer reagierendes Oxid ohne ausgeprägte oxidierende oder reduzierende Eigenschaften mit einer Standardbildungsenthalpie von kleiner −900 kJ/mol bilden können, in Mengen von 0,1 bis 30 Gewichtsteilen vorliegen.

d) 0 bis 100 Gewichtsteile mineralischer Fasern und

e) 0 bis 20 Gewichtsteile mineralischer Pigmente und/oder Erdalkalioxide trocken unter Erhaltung der Struktur der Komponenten gemischt,

2) die Mischung(en) in eine gewünschte Form gebracht,

3) auf Dichten von 0,15 bis 1 g/cm³ verdichtet und

4) auf 200 bis 900°C, jedoch mindestens auf eine solche Temperatur erhitzt werden, bei der eine chemische Reaktion eintritt, die unter Vermeidung einer Sinterung zu einem Körper mit einer auch unter Einwirkung von Wasser im Bereich von 0,5 — 3 MN/m² bleibenden Druckfestigkeit führt.

2. Verfahren nach Anspruch 1, dadurch gekennzeichnet, daß als Komponente c Bor, Aluminium, Silicium, Antimon, Zirkonium, Titan, Chrom, Mangan, Eisen, Zirkonborid, Aluminiumborid, Titanborid, Calciumborid, Borcarbid, Calciumsilicid und/oder Calciumaluminiumsilicid eingesetzt werden.

3. Verfahren nach Anspruch 1 oder 2, dadurch gekennzeichnet, daß als mineralische Trübungsmittel anorganische Oxide, Mischoxide, Carbide und/oder Nitride mit mindestens einem Absorptionsmaximum im Wellenlängenbereich von 1,5 bis 10 µm mit BET-Oberflächen von 0,2 bis 20 m²/g eingesetzt werden.

**Revendications**

1. Procédé de fabrication d'objets moulés calorifuges à base de composés métalliques du type oxydes, finement dispersés et insolubles dans l'eau, plus spécialement des éléments silicium et/ou aluminium, de liants minéraux, éventuellement d'opacifiants, éventuellement de fibres minérales et éventuellement d'additifs supplémentaires, objets moulés qui ont des conductivités thermiques de 0,02 à 0,1 W/m·K à des températures d'environ 300 à environ 500°C, procédé caractérisé en ce que:

1. on mélange à sec tout en conservant la structure des composantes:

a) 100 parties en poids de composés métalliques du type oxydes, insoluble dans l'eau, plus particulièrement du silicium et/ou de l'aluminium, ayant une surface BET de 10 à 700 m²/g, au moins 5% en poids du poids total de ces composés ayant une surface BET d'au moins 50 m²/g,

b) de 0 à 100 parties en poids d'opacifiants minéraux ayant au moins un maximum d'absorption dans la région des longueurs d'onde allant de 1,5 à 10 µm,

c) des éléments et/ou des composés de ces éléments entre eux et/ou avec du calcium ou du carbone et/ou leurs mélanges en des quantités telles que les éléments qui peuvent former au moins un oxyde solide n'ayant, dans l'eau froide, qu'une faible solubilité ou une solubilité nulle et donnant une réaction basique à légèrement acide, sans propriétés oxydantes ou réductrices prononcées et ayant une enthalpie de formation standard inférieure à −900 kJ/moule, soient présents en des quantités de 0,1 à 30 parties en poids,

d) de 0 à 100 parties en poids de fibres minérales et

e) de 0 à 20 parties en poids de pigments minéraux et/ou d'oxydes de métaux alcalinoterreux,

2. on donne au(x) mélange(s) la forme voulue,

3. on les comprime jusqu'à des masses volumiques de 0,15 à 1 g/cm³, et

4. on les chauffe à une température de 200 à 900°C, en tout cas au moins à une température telle qu'il se déclenche une réaction chimique qui, tout en évitant un frittage, conduit à un objet présentant une résistance à la compression qui, même sous l'action de l'eau, reste comprise entre 0,5 et 3 MN/m².

2. Procédé selon la revendication 1, caractérisé en ce qu'on utilise, comme composantes c, le bore, l'aluminium, le silicium, l'antimoine, le zirconium, le titane, le chrome, le manganèse, le fer, le borure de zirconium, le borure d'aluminium, le borure de titane, le borure de calcium, le carbure de bore, le siliciure de calcium et/ou le siliciure de calcium-aluminium.

3. Procédé selon l'une des revendications 1 et 2, caractérisé en ce qu'on utilise, comme opacifiants minéraux, des oxydes mixtes, carbures et/ou nitrures minéraux ayant au moins un maximum d'absorption dans l'intervalle des longueurs d'onde allant de 1,5 à 10 µm et des surfaces BET comprises entre 0,2 et 20 m²/g.

## Claims

1. Process for the manufacture of shaped heat-insulating bodies based on finely dispersed water-insoluble oxidic metal compounds, in particular of the elements silicon and/or aluminium, inorganic binders, if appropriate opacifying agents, if appropriate mineral fibres and if appropriate other additives, these bodies having thermal conductivities of 0.02 to 0.1 W/Km (sic) at temperatures of about 300 to about 500°C, characterized in that

1a) 100 parts by weight of water-insoluble oxidic metal compounds, in particular of the elements silicon and/or aluminium, having a BET surface area of 10 to 700 m²/g, at least 5% by weight of the total weight of these compounds having a BET surface area of at least 50 m²/g,

b) 0 to 100 parts by weight of mineral opacifying agents having at least one absorption maximum in the wavelength range from 1.5 to 10 µm,

c) elements and/or compounds of these elements with one another and/or with calcium or carbon and/or mixtures thereof in amounts such that the elements, which can form at least one solid, basic to weakly acidic oxide which is only sparingly soluble to insoluble in cold water and has no pronounced oxidizing or reducing properties and a standard formation enthalpy of less than −900 kJ/mol, are present in amounts of 0.1 to 30 parts by weight,

d) 0 to 100 parts by weight of mineral fibres and

e) 0 to 20 parts by weight of mineral pigments and/or alkaline earth metal oxides are mixed in the dry state, the structure of the compounds being maintained, and

2) the mixture(s) is (are) introduced into the desired mould,

3) compressed to densities of 0.15 to 1 g/cm³, and

4) heated to 200 to 900°C, but at least to such a temperature at which a chemical reaction starts which leads to a body having a compressive strength which remains in the range from 0.5 to 3 MN/m² even under the action of water, avoiding sintering.

2. Process according to Claim 1, characterized in that boron, aluminium, silicon, antimony, zirconium, titanium, chromium, manganese, iron, zirconium boride, aluminium boride, titanium boride, calcium boride, boron carbide, calcium silicide and/or calcium aluminium silicide are employed as component c.

3. Process according to Claim 1 or 2, characterized in that inorganic oxides, mixed oxides, carbides and/or nitrides having at least one absorption maximum in the wavelength range from 1.5 to 10 µm and BET surface areas of 0.2 to 20 m²/g are employed as the mineral opacifying agents.